# EUROPÄISCHE PATENTSCHRIFT

(11) **EP 0 704 148 B1**
(45) Veröffentlichungstag und Bekanntmachung des Hinweises auf die Patenterteilung: **08.12.1999**
(21) Anmeldenummer: 95113739.7
(22) Anmeldetag: 01.09.1995
(51) Int. Cl.: A01D 82/00

(54) **Verfahren zur Aufbereitung von Halmgut z. B. Wiesengras und Vorrichtung zur Durchführung des Verfahrens**
Method for conditioning cereals i.e. meadow grass and device for executing the method
Procédé pour conditionner des céréales, p. exemple gazon des prairies et dispositif pour mettre en oeuvre ce procédé

(30) Priorität: 01.10.1994 DE 4435269
(43) Veröffentlichungstag der Anmeldung: 03.04.1996
(73) Patentinhaber: CLAAS SAULGAU GMBH, D-88340 Saulgau (DE)
(72) Erfinder: Geng, Manfred, D-88348 Saulgau-Bogenweiler (DE)

(56) Entgegenhaltungen:
- AT-B- 372 573
- DE-A- 3 830 543
- DE-B- 1 210 604
- GB-A- 2 169 184

## Beschreibung

Die Erfindung bezieht sich auf ein Verfahren nach dem Gattungsbegriff des Anspruches 1.

In den vergangenen Jahren ist es üblich geworden, Wiesengras gleichzeitig mit dem Mähen aufzubereiten, d. h., die Stengel mehrfach zu knicken, um den Austritt des in der Pflanze enthaltenen Wassers zu erleichtern. Das geschieht meistens so, daß das geschnittene Gras, noch bevor es auf den Boden kommt, einem um eine horizontale Achse umlaufenden Rotor zugeführt wird, der an seinem Umfang schlagende Werkzeuge besitzt. Da das Gras dem Rotor mit einer Geschwindigkeit zugeführt wird, deren Richtung etwa derjenigen der Umfangsgeschwindigkeit des Rotors an der Einlaufstelle entspricht, muß die Umfangsgeschwindigkeit hoch gehalten werden, um eine ausreichende Schlagwirkung zu erreichen. Ein weiterer Nachteil dieser Geräte besteht darin, daß das aufbereitete Gras bei der Ablage kaum ausgebreitet wird.

Die beiden größten Nachteile bei den bisherigen Methoden der Grasaufbereitung sollen bei dem Verfahren nach der Erfindung vermieden werden. Es geht davon aus, daß das Gras nach dem Mähen auf dem Boden abgelegt bleibt und daß eine Vielzahl von um etwa senkrechte Achsen umlaufende, mit Kanten versehene schlagende Werkzeuge von oben her in das gemähte und auf dem Boden liegende Erntegut eingreifen und dieses dabei sowohl knicken, als auch locker zerstreuen. Gegenüber dem zuvor beschriebenen Verfahren hat das den Vorteil, daß die schlagenden Werkzeuge mit ihrer vollen Umfangsgeschwindigkeit auf das ruhende Erntegut auftreffen und daß außerdem noch eine zerstreuende Wirkung vorhanden ist, durch deren Einfluß das Erntegut schleierförmig auf dem Boden verteilt wird.

In den Ansprüchen 2 bis 4 wird eine Vorrichtung aufgezeigt, mit deren Hilfe das beanspruchte Verfahren durchgeführt werden kann. Es hat sich als vorteilhaft erwiesen, wenn die schlagenden Werkzeuge gemäß den Ansprüchen 5 und 6 gelenkig mit den sie tragenden Armen verbunden sind, wie das z. B. bei Kreiselheumaschinen nach der EP - OS 0 358 026 vorgeschlagen wurde.

Durch die Anordnung mehrerer Kreisel nebeneinander kann eine große Arbeitsbreite erreicht werden. Es ist weiterhin möglich, daß die schlagenden Werkzeuge mittels Schnellverschlüssen oder dergleichen gegen federnde Arbeitswerkzeuge ausgetauscht werden, die bei bereits vorgetrocknetem Erntegut schonender wirken.

Die Erfindung wird anhand von zwei Abbildungen beispielsweise erläutert.
- Figur 1: zeigt eine Vorrichtung zur Aufbereitung von Halmgut schematisch und in einer Seitenansicht,
- Figur 2: eine entsprechende Vorrichtung mit gelenkig angebrachten Schlagwerkzeugen.

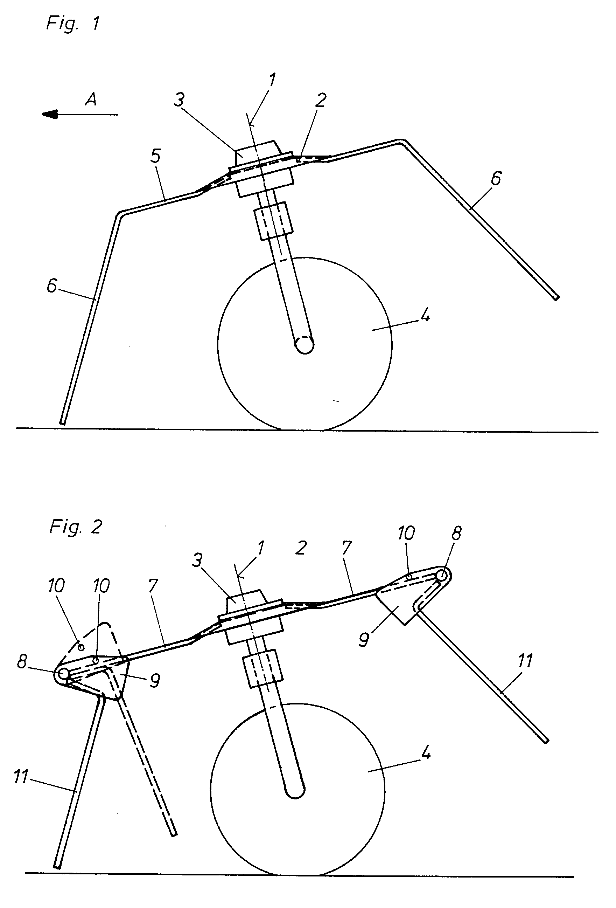

An einer in Fahrtrichtung A nach vorne geneigten Drehachse (1) ist ein mehrarmiger Kreisel (2) drehbar gelagert. Er wird über ein Getriebe (3) von einer nicht dargestellten Schlepperzapfwelle angetrieben. Die Drehachse (1) stützt sich über ein Laufrad (4) auf den Boden ab. Mit den Armen (5) des Kreisels (2) sind nach unten gerichtete, stabförmige Schlagwerkzeuge (6) fest verbunden (Figur 1). Bei einer Ausführung nach Figur 2 haben Arme (7) des Kreisels (2) an ihren freien Enden tangential gerichtete Drehgelenke (8). An den Drehgelenken (8) sind taschenförmige Werkzeugträger (9) schwenkbar gelagert. Die Beweglichkeit der Werkzeugträger (9) wird in einer Richtung durch Stifte (10) begrenzt. Mit den Werkzeugträgern (9) sind stabförmige Schlagwerkzeuge (11) fest verbunden. Im Betrieb nehmen die Schlagwerkzeuge (11) unter dem Einfluß der Fliehkraft die ausgezogen gezeichnete Stellung ein. Wenn ein Schlagwerkzeug (11) auf einen grösseren Widerstand trifft, kann es in eine gestrichelt gezeichnete Stellung nach hinten und oben ausweichen.

Die Vorrichtung wird im Betrieb in Richtung des Pfeiles A vorwärts bewegt. Die um die Drehachse (1) drehenden Schlagwerkzeuge (6) bzw. (11) dringen dabei in das gemähte und auf dem Boden liegende Halmgut ein. Infolge der Massenträgheit des Halmgutes und seinem Reibungswiderstand auf dem Boden wird das Halmgut von den umlaufenden Schlagwerkzeugen (6, 11) mehrfach getroffen und dabei geknickt und zur Seite verstreut.

## Patentansprüche

1. Verfahren zur Aufbereitung von Halmgut mit umlaufenden, schlagenden Werkzeugen,
dadurch gekennzeichnet,
daß eine Vielzahl von um geneigte vertikale Achsen (1) umlaufende, mit Kanten versehene, schlagende Werkzeuge (6, 11) von oben her in das gemähte und auf dem Boden liegende Erntegut eingreifen und dieses dabei sowohl knicken als auch locker zerstreuen.

2. Vorrichtung zur Durchführung des Verfahrens nach Anspruch 1, dadurch gekennzeichnet, daß die schlagenden Werkzeuge (6, 11) an den Armen (5, 7) von um geneigte vertikale Achsen (1) umlaufenden Kreiseln (2) befestigt sind und sich von dort nach unten erstrecken.

3. Vorrichtung nach Anspruch 2, dadurch gekennzeichnet, daß die schlagenden Werkzeuge (6, 11) aus je einem mehrkantigen Stab mit scharfen Kanten bestehen.

4. Vorrichtung nach den Ansprüchen 2 und 3, dadurch gekennzeichnet, daß die Stäbe einen rechteckigen Querschnitt haben.

5. Vorrichtung nach den Ansprüchen 2 bis 4, dadurch gekennzeichnet, daß die schlagenden Werkzeuge (11) gelenkig angebracht sind.

6. Vorrichtung nach Anspruch 5, dadurch gekennzeichnet, daß die Arme (7) an ihren freien Enden tangential gerichtete Drehgelenke (8) tragen, an denen die schlagenden Werkzeuge (11) schwenkbar gelagert sind.

7. Vorrichtung nach den Ansprüchen 2 bis 6, dadurch gekennzeichnet, daß mehrere Kreisel (2) nebeneinander und gegenläufig angetrieben derart angeordnet sind, daß sich die Umkreise der schlagenden Werkzeuge (6, 11) überschneiden.

8. Vorrichtung nach den Ansprüchen 2 bis 7, dadurch gekennzeichnet, daß die schlagenden Werkzeuge (6, 11) mittels Schnellverschlüssen oder dergleichen gegen federnde, überwiegend nur streuend wirkende Arbeitswerkzeuge ausgetauscht werden können.

## Claims

1. A method of processing stalk material with rotating beater tools, characterised in that a plurality of beater tools (6, 11) which are provided with edges and which rotate about inclined vertical axes (1) engage from above into the mown crop material lying on the ground and in so doing both bend the crop material and also loosely scatter it.

2. Apparatus for carrying out the method according to claim 1 characterised in that the beater tools (6, 11) are fixed to the arms (5, 7) of rotors (2) which rotate about inclined vertical axes (1) and extend from there downwardly.

3. Apparatus according to claim 2 characterised in that the beater tools (6, 11) each comprise a respective multi-edge bar with sharp edges.

4. Apparatus according to claims 2 and 3 characterised in that the bars are of a rectangular cross-section.

5. Apparatus according to claims 2 to 4 characterised in that the beater tools (11) are mounted pivotably.

6. Apparatus according to claim 5 characterised in that at their free ends the arms (7) carry tangentially directed pivots (8) to which the beater tools (11) are pivotably mounted.

7. Apparatus according to claims 2 to 6 characterised in that a plurality of rotors (2) are arranged side-by-side and driven in opposite relationship in such a way that the circumferences defined by the beater tools (6, 11) overlap.

8. Apparatus according to claims 2 to 7 characterised in that the beater tools (6, 11) can be replaced by means of quick-action fasteners or the like by resilient working tools which predominantly have only a scattering effect.

## Revendications

1. Procédé pour conditionner des céréales à l'aide d'outils rotatifs de battage,
caractérisé par le fait
qu'un grand nombre d'outils de battage (6, 11), munis d'arêtes et tournant autour d'axes verticaux inclinés (1), pénètrent de haut en bas dans le produit récolté fauché jonchant le sol, en coudant à la fois ce dernier, et en le dispersant de manière aérée.

2. Dispositif pour la mise en oeuvre du procédé selon la revendication 1, caractérisé par le fait que les outils de battage (6, 11) sont fixés aux bras (5, 7) de râteaux circulaires (2) tournant autour d'axes verticaux inclinés (1), et s'étendent vers le bas à partir desdits bras.

3. Dispositif selon la revendication 2, caractérisé par le fait que les outils de battage (6, 11) sont respectivement constitués d'une barrette à bords multiples, présentant des arêtes vives.

4. Dispositif selon les revendications 2 et 3, caractérisé par le fait que les barrettes ont une section transversale rectangulaire.

5. Dispositif selon les revendications 2 à 4, caractérisé par le fait que les outils de battage (11) sont installés de manière articulée.

6. Dispositif selon la revendication 5, caractérisé par le fait que les bras (7) portent, à leurs extrémités libres, des articulations tournantes (8) dirigées tangentiellement et sur lesquelles les outils de battage (11) sont montés à pivotement.

7. Dispositif selon les revendications 2 à 6, caractérisé par le fait que plusieurs râteaux circulaires (2) sont entraînés en juxtaposition et en sens inverse, de telle sorte que les circonférences décrites par les outils de battage (6, 11) s'entrecoupent en superposition.

8. Dispositif selon les revendications 2 à 7, caractérisé par le fait que les outils de battage (6, 11) peuvent être remplacés, au moyen de fermetures rapides ou systèmes similaires, par des outils de travail élastiques n'exerçant, majoritairement, qu'un effet de dispersion.
